# EUROPEAN PATENT SPECIFICATION

(11) **EP 4 184 833 B1**
(45) Date of publication and mention of the grant of the patent: **24.06.2026**
(21) Application number: 21843268.0
(22) Date of filing: 14.07.2021
(51) Int. Cl.: H04L 1/1829, H04L 1/1867, H04L 1/1822, H04L 5/00, H04W 72/0446

(54) **FEEDBACK INFORMATION TRANSMISSION METHOD AND APPARATUS, TERMINAL, AND NETWORK SIDE DEVICE**
VERFAHREN UND VORRICHTUNG ZUR ÜBERTRAGUNG VON RÜCKKOPPLUNGSINFORMATIONEN, ENDGERÄT UND NETZWERKSEITIGE VORRICHTUNG
PROCÉDÉ ET APPAREIL DE TRANSMISSION D'INFORMATIONS EN RETOUR, TERMINAL ET DISPOSITIF CÔTÉ RÉSEAU

(30) Priority: 16.07.2020 CN 202010688012
(43) Date of publication of application: 24.05.2023
(73) Proprietor: Vivo Mobile Communication Co., Ltd., Dongguan, Guangdong 523863 (CN)
(72) Inventor: CHEN, Xiaohang, Dongguan, Guangdong 523863 (CN); PAN, Xueming, Dongguan, Guangdong 523863 (CN); LU, Zhi, Dongguan, Guangdong 523863 (CN)
(74) Representative: Conti, Marco
(86) International application number: PCT/CN2021/106266
(87) International publication number: WO 2022/012592

(56) References cited:
- EP-A1- 4 181 439
- WO-A1-2018/058743
- WO-A1-2018/126932
- WO-A1-2019/127154
- CN-A- 110 034 892
- CN-A- 110 719 153
- CMCC: "Discussion on scheduling and HARQ management", vol. RAN WG1, no. Busan, Korea; 20180521 - 20180525, 20 May 2018 (2018-05-20), XP051441573, Retrieved from the Internet <URL:http://www.3gpp.org/ftp/Meetings%5F3GPP%5FSYNC/RAN1/Docs/> [retrieved on 20180520]

## Description

### TECHNICAL FIELD

This application pertains to the field of wireless communications technologies, and specifically relates to a method and an apparatus for transmitting feedback information.

### BACKGROUND

Compared with previous mobile communications systems, the fifth generation (5^{th} Generation, 5G) mobile communications system needs to adapt to more diverse scenarios and service requirements. For example, major scenarios of new radio (New Radio, NR) include enhanced mobile broadband (eMBB), massive machine type communications (mMTC), and ultra-reliable and low latency communications (URLLC). These scenarios also impose requirements of high reliability, low latency, large bandwidth, and wide coverage for the 5^{th} mobile communications system.

In order to reduce overheads of downlink control signaling for a periodic service with a fixed packet size, a network-side device may continuously allocate specific resources in a semi-persistent scheduling manner for transmission of the periodic service, which can reduce overheads for scheduling VoLTE voice packets with a relatively small size for periodic transmission, for example, overheads for a physical downlink control channel (physical downlink control channel, PDCCH), so that more resources can be used for scheduling additional terminals (User Equipment, UE). Such a manner of downlink semi-persistent scheduling is referred to as DL SPS (Semi-Persistent Scheduling).

Currently, the network-side device may configure, through higher layer signaling, parameters required by the DL SPS for the terminal, for example, period, quantity of hybrid automatic repeat request (Hybrid automatic repeat request, HARQ) processes, and hybrid automatic repeat request acknowledgment (Hybrid automatic repeat request acknowledgment, HARQ-ACK) feedback resource. After the UE configures a DL SPS resource configuration, the network-side device may activate the configured DL SPS configuration by downlink control information (Downlink Control Information, DCI). The DCI contains transmission parameters for DL SPS transmission, such as resource and modulation and coding scheme (Modulation and coding scheme, MCS). By receiving the DCI, the UE may determine an occasion of the DL SPS transmission and a frequency resource at the corresponding occasion. At each occasion of DL SPS transmission, the UE monitors for a corresponding data transmission on the DL SPS resource.

For an SPS configuration, a network indicates an HARQ-ACK feedback resource for HARQ-ACK feedback of an SPS PDSCH. The HARQ-ACK feedback resource cannot be changed after the SPS configuration is activated, and the HARQ-ACK feedback resource is used for HARQ-ACK feedback throughout the HARQ feedback process. When the HARQ-ACK feedback resource collides with a DL resource (or a resource unavailable for uplink transmission), the HARQ-ACK feedback of the SPS PDSCH is discarded, and the HARQ-ACK feedback cannot be implemented, resulting in performance degradation of the SPS PDSCH.

EP4181439A1 discloses a HARQ-ACK feedback method and apparatus, so as to solve a problem that a terminal cannot perform HARQ-ACK feedback in a case that the terminal is configured with a DL SPS. The method may be applied to a terminal. The method includes determining, based on first information, a HARQ-ACK codebook corresponding to M DL SPS configurations; where the first information includes at least one of the following: first HARQ-ACK feedback indication information, first TDD configuration information, and first dynamic slot format information; and M ≥ 1, and M is an integer.

CMCC: "Discussion on scheduling and HARQ management", 3GPP DRAFT; R1-1806368 proposes to configure multiple HARQ-ACK resources for a DL SPS transmission by RRC signalling, and UE use the first valid HARQ-ACK resource for DL SPS ACK/NACK transmission, where the valid HARQ-ACK resource means the HARQ-ACK resource is not earlier than n+k and not indicated as "DL" by semi-static DL/UL configuration.

### SUMMARY

Embodiments of this application are intended to provide a method and apparatus for transmitting feedback information, a terminal, and a network-side device, so as to resolve a problem that HARQ-ACK feedback cannot be implemented because an SPS configuration has only one HARQ-ACK feedback resource. The invention is set out in the appended set of claims.

In the embodiments of this application, a terminal determines a target time-domain resource based on received feedback time indication information, and transmits the first feedback information on the target time-domain resource, where the terminal is configured with at least one DL SPS configuration resource, the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel of a first target DL SPS, and the first target DL SPS is at least one of the at least one DL SPS. Therefore, in the technical solutions provided in this application, at least one candidate time-domain feedback resource is indicated for a first target DL SPS, thereby avoiding a problem that HARQ-ACK feedback cannot be implemented because an SPS configuration has only one HARQ-ACK feedback resource. Especially when a plurality of SPS configurations are configured or there are many DL resources, a problem of performance degradation in an SPS PDSCH caused by frequent discarding of a HARQ-ACK for the SPS PDSCH can be avoided.

### BRIEF DESCRIPTION OF DRAWINGS

FIG. 1 is a schematic structural diagram of a communications system according to an example embodiment of this application.
FIG. 2 is a schematic flowchart of a method for transmitting feedback information, applied to a terminal, according to an example embodiment of this application;
FIG. 3 is a schematic flowchart of a method for transmitting feedback information, applied to a terminal, according to another example embodiment of this application;
FIG. 4 is a schematic flowchart of a method for indicating a feedback time, applied to a network-side device, according to an example embodiment of this application;
FIG. 5 is a schematic flowchart of a method for indicating a feedback time, applied to a network-side device, according to another example embodiment of this application;
FIG. 6 is a schematic diagram of a slot structure according to an example embodiment of this application;
FIG. 7 is a schematic diagram of a slot structure according to another example embodiment of this application;
FIG. 8 is a schematic diagram of a slot structure according to a still another example embodiment of this application;
FIG. 9 is a schematic diagram of a slot structure according to a still another example embodiment of this application;
FIG. 10 is a schematic diagram of a slot structure according to a still another example embodiment of this application;
FIG. 11 is a schematic diagram of a slot structure according to a still another example embodiment of this application;
FIG. 12 is a schematic block diagram of an apparatus for transmitting feedback information according to an example embodiment of this application;
FIG. 13 is a schematic block diagram of a terminal according to an example embodiment of this application;
FIG. 14a is a schematic block diagram of an apparatus for indicating a feedback time according to an example embodiment of this application;
FIG. 14b is a schematic block diagram of an apparatus for indicating a feedback time according to another example embodiment of this application; and
FIG. 15 is a schematic block diagram of a network-side device according to an example embodiment of this application.

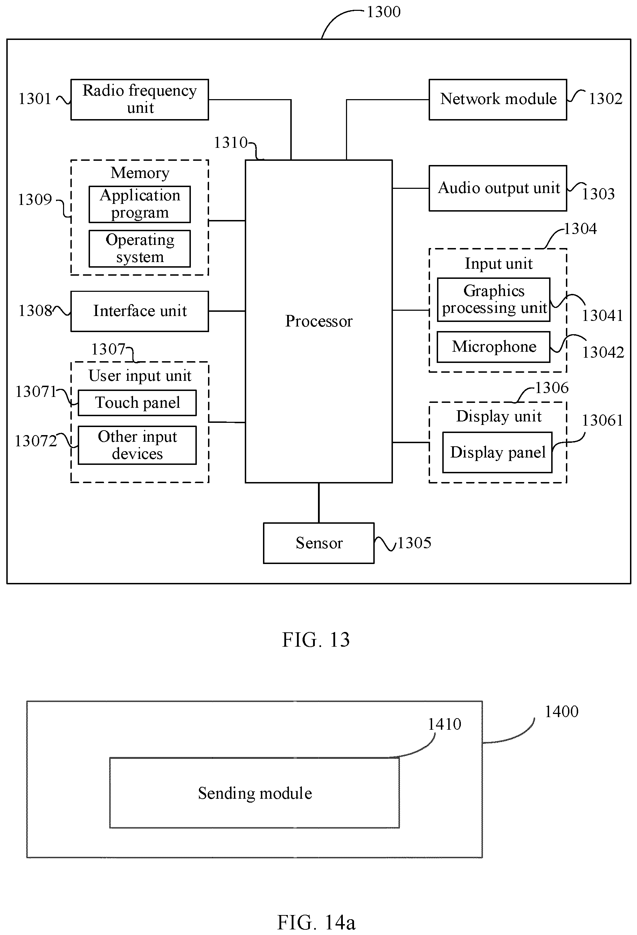

The embodiments of FIG. 13-15 are not covered by the claimed invention.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates an "or" relationship between the associated objects.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. The technology described may be used in the above-mentioned systems and radio technologies as well as other systems and radio technologies. However, in the following descriptions, a new radio system is described for an illustration purpose, and NR terms are used in most of the following descriptions. These technologies may also be applied to other applications than an NR system application, such as a sixth generation (6^{th} Generation, 6G) communications system.

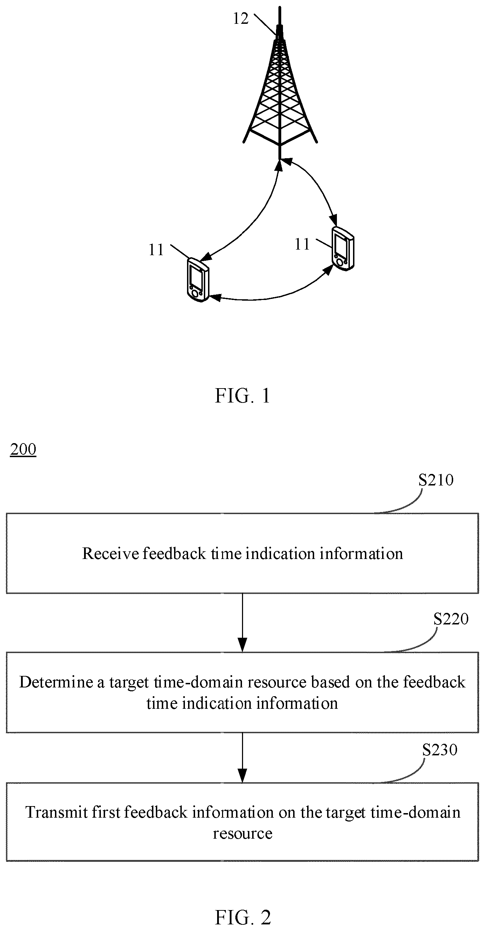

FIG. 1 is a block diagram of a wireless communications system to which an embodiment of this application is applicable. The wireless communications system includes a terminal 11 and a network-side device 12. The terminal 11 may also be referred to as a terminal device or a user terminal. The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or a pedestrian user equipment (PUE). The wearable device includes a wristband, earphones, glasses, and the like. It should be noted that a specific type of the terminal 11 is not limited in the embodiments of this application.

The network-side device 12 may be a base station or a core network, where the base station may be referred to as an access point, a base transceiver station (Base Transceiver Station, BTS), a radio base station, a radio transceiver, a basic service set (Basic Service Set, BSS), an extended service set (Extended Service Set, ESS), a B Node, an evolved B node (eNB), a home NodeB, a home evolved NodeB, a WLAN access point, a Wi-Fi node, a transmission and reception point (Transmission and Reception Point, TRP), or another appropriate term in the art. Provided that the same technical effects are achieved, the base station is not limited to a specific technical term. It should be noted that the base station in the NR system is merely used as an example in the embodiments of this application, but a specific type of the base station is not limited.

The following describes in detail the technical solutions that are provided in the embodiments of this application through specific embodiments and application scenarios thereof with reference to the accompanying drawings.

The following technical solutions provided in the embodiments may be applicable to licensed bands (licensed band), and may also be applicable to a time division duplex (Time Division Duplex, TDD) scenario or a frequency division duplex (Frequency Division Duplex, FDD) scenario in unlicensed bands (unlicensed band), for example, a scenario in which an HARQ-ACK cannot be transmitted due to listen before talk (Listen before talk, LBT).

It should be understood that in a future communications system, an unlicensed band may be used as a supplement to licensed bands, to help an operator expand services. In order to be consistent with an NR (New Radio, new radio) deployment and maximize NR-based access in an unlicensed frequency band, the unlicensed bands may be configured in frequency bands of 5 GHz, 37 GHz, and 60 GHz. A large bandwidth (80 MHz or 100 MHz) in the unlicensed bands may reduce implementation complexity of base stations and UEs. Since unlicensed bands are shared by a plurality of radio access technologies (RATs), such as WiFi, radar, and LTE-LAA, in some countries or regions, usage of the unlicensed bands must comply with regulations, for example rules such as LBT and maximum channel occupancy time (Maximum Channel Occupancy Time, MCOT), to ensure that all devices may use the resource fairly. When needing to send information, a transmission node needs to perform LBT first to perform energy detection (Energy Detection, ED) on surrounding nodes. When a detected power is lower than a threshold, a channel is considered to be idle (idle) and the transmission node can send data. Otherwise, the channel is considered to be busy and the transmission node cannot send data. Optionally, the transmission node may be a base station, UE, a WiFi AP, and the like. After the transmission node starts to perform transmission, a channel occupancy time (COT) cannot be greater than the MCOT.

In addition, commonly used categories (category) of LBT may include category 1, category 2, and category 4, where:
in category 1 LBT, a sending node does not perform LBT, which means no LBT or immediate transmission (Immediate Transmission);
category 2 LBT means one-slot LBT, that is, a node performs LBT once before transmission, and transmission is performed when the channel is idle, or no transmission is performed when the channel is busy; and
category 4 LBT means a back-off-based channel listening mechanism. When detecting that a channel is busy, the transmission node performs back-off and continues to listen until it detects that a channel is idle.

In the foregoing three commonly used categories, for a base station (gNB), the category 2 LBT may be applied to DRS (Discovery signal, discovery reference signal); and the category 4 LBT may be applied to PDSCH/DCI/eDCI. For a terminal, category 4 LBT may be applied to a type 1 UL channel access procedure; category 2 LBT may be applied to a type 2 UL channel access procedure. In addition, in NR-U, a category 2 LBT is newly added, corresponding to a gap (gap) of 16 µs.

Further, FIG. 2 is a schematic flowchart of a method 200 for transmitting feedback information according to an example embodiment of this application. The method 200 for transmitting feedback information may be performed by a terminal, and specifically may be performed by hardware or/and software installed on the terminal. Still referring to FIG. 2, the method may include at least the following steps.

S210. Receive feedback time indication information.

The feedback time indication information may be sent by a network-side device, and is used to indicate at least one first candidate time-domain feedback resource (also referred to as a feedback opportunity, a candidate opportunity, a feedback resource, or the like). The first candidate time-domain feedback resource is a candidate time-domain resource for transmission of first feedback information (such as a HARQ-ACK or a HARQ-NACK). The terminal may be configured with at least one DL SPS configuration resource. The first feedback information is feedback information corresponding to a downlink data channel of a first target DL SPS, and the first target DL SPS is at least one of the at least one DL SPS.

In this embodiment of this application, the feedback time indication information is used to indicate a candidate time-domain feedback resource used by the HARQ-ACK feedback.

In a possible implementation, a method for configuring the feedback time indication information may be flexibly set according to actual requirements. For example, the feedback time indication information may be designed by the network-side device based on time-domain resource configuration for downlink (DL) transmission. Therefore, when the terminal determines a target time-domain resource to transmit first feedback information based on the feedback time indication information, the following problem in the prior art can be avoided: HARQ-ACK feedback times of different DL SPS configurations are unrelated and relatively dispersive because a HARQ-ACK feedback time of each DL SPS configuration is indicated in separate active DCI. In addition, the following problem can be further avoided: A collision between the target time-domain resource and the time-domain resource for downlink transmission causes discarding of the first feedback information and consequently, feedback cannot be implemented. Especially when there are a plurality of DL SPS configuration resources, discarding of the first feedback information caused by time-domain resource collision occurs more frequently. In this way, reliability of feedback information transmission can be effectively ensured, and transmission performance of feedback information can be improved.

Optionally, a type of the first feedback information may be designed according to actual communication requirements, which is not limited in this embodiment. For example, the first feedback information may be feedback information for some or all of HARQ processes for the first target DL SPS, such as a HARQ-ACK or a HARQ-NACK.

In one or more embodiments of this application, that the terminal receives feedback time indication information includes receiving the feedback time indication information sent in one of the following manners (1) to (3).
(1) Send the feedback time indication information to the terminal by radio resource control (Radio Resource Control, RRC).
(2) Send the feedback time indication information to the terminal by group common DCI, where feedback time indication information for terminals in a terminal group can be indicated together by sending the feedback time indication information to the terminal by group common DCI.
(3) Send the feedback time indication information to the terminal by DCI specific (Specific) to the terminal, that is, the DCI is DCI specific to the terminal.

S220. Determine a target time-domain resource based on the feedback time indication information.

A manner in which the terminal determines a target time-domain resource varies with feedback time indication information. For example, if a first candidate time-domain resource indicated in the feedback time indication information is a specific feedback occasion (for example, the first candidate time-domain resource may be one or more time slots, symbols, sub-slots, subframes, or the like), the target time-domain resource may be the first candidate time-domain resource; if a first candidate time-domain resource in the feedback time indication information is feedback occasion reference information, the terminal may determine the target time-domain resource based on the feedback occasion reference information and a preset target time-domain determining rule; and so on, which are not limited in this embodiment.

S230. Transmit the first feedback information on the target time-domain resource.

In an implementation, the first feedback information is, for example, a HARQ-ACK. During transmission of the first feedback information, the foregoing HARQ-ACK feedback may correspond to all HARQ process numbers (HARQ process numbers)/IDs configured by a DL SPS configuration or a group of DL SPS configurations, or correspond to HARQ process numbers/IDs corresponding to DL SPSs transmitted from slot (n-k) to slot (n), where slot (n) is a slot in which the terminal receives the trigger HARQ-ACK feedback, and k may be a predefined value configured by a network side, for example, the value is a largest value in a K1 set.

It should be understood that each terminal may configure a HARQ-ACK timing table specific to the terminal by RRC. The table contains a plurality of HARQ-ACK timing values, referred to as K1 values, and K1 may be in a unit of slot. When dynamically scheduling downlink data transmission, the network-side device (such as a base station) may indicate one K1 value in the form of an index in DCI. The K1 value is a value selected from the HARQ-ACK timing table specific to the terminal and is used to notify the terminal of an occasion for feeding back the HARQ-ACK.

In the foregoing method for transmitting feedback information provided in this embodiment, the terminal receives the feedback time indication information and determines the target time-domain resource for transmission of the first feedback information based on the feedback time indication information. In this way, the following problem in the prior art can be avoided: A feedback time (that is, a time-domain resource) of feedback information (such as a HARQ-ACK) of each DL SPS configuration is indicated in separate active DCI, resulting that some feedback information (such as a HARQ-ACK for an SPS PDSCH) may always be discarded and SPS PDSCH performance degrades.

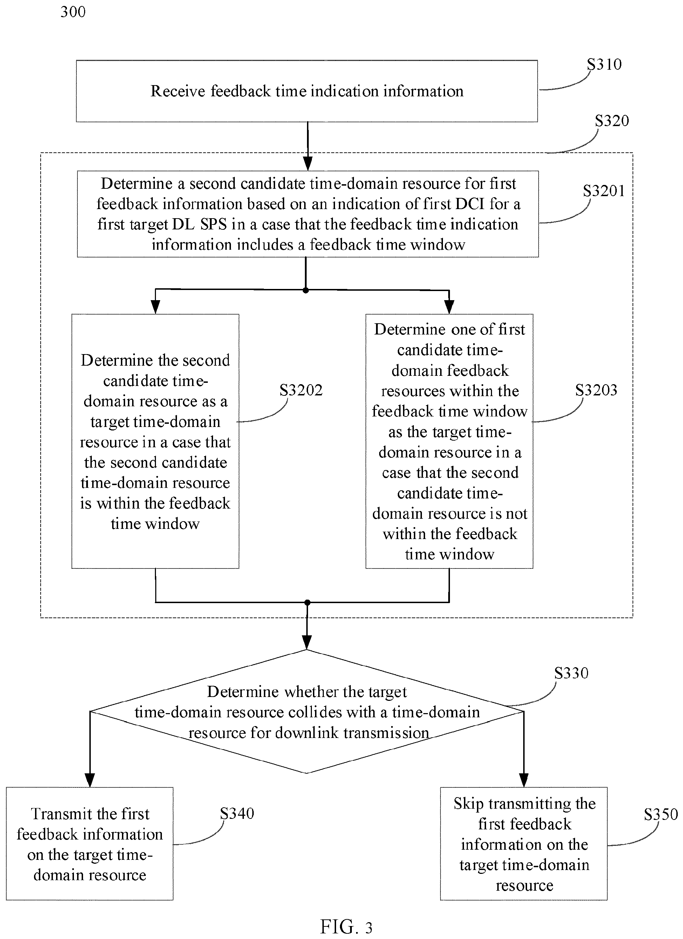

FIG. 3 is a schematic flowchart of a method 300 for transmitting feedback information according to an example embodiment of this application. The method 300 for transmitting feedback information may be performed by a terminal, and specifically may be performed by hardware or/and software installed on the terminal. Still referring to FIG. 3, the method may include at least the following steps.

S310. Receive feedback time indication information.

For S310, reference may be made to the detailed descriptions in S210. Moreover, in a possible implementation of this application, the feedback time indication information may include at least one of the following (1) to (8).
(1) A feedback time window.

The feedback time window may be understood as a period of time of a specific length, and within the feedback time window, at least one of the first candidate time-domain feedback resource may be included.

In an implementation, the feedback time window may include at least one time unit, and each time unit includes at least one of the first candidate time-domain feedback resource, where the time unit may be but is not limited to slot (slot), sub-slot (sub-slot), subframe (subframe), or symbol (symbol).

(2) A start position of the first candidate time-domain feedback resource.

In practical applications, an actual start position of a candidate time-domain resource indicated by the start position varies with the quantity of first candidate time-domain resources included in the feedback time window and the quantity of start positions included in the feedback time indication information. Specific analysis is as follows.

(21) When the feedback time window includes a plurality of first candidate time-domain feedback resources, the feedback time indication information includes start positions of one or more first candidate time-domain feedback resources.

(210) In a case that the feedback time indication information includes a start position of a first candidate time-domain feedback resource (such as a 1st first candidate time-domain feedback resource within the feedback time window), start positions of the remaining first candidate time-domain feedback resources are derived by the terminal according to a length of each first candidate time-domain feedback resource or the like.

For example, it is assumed that the feedback time indication information includes a start position Q, a length of the 1st first candidate time-domain resource in the feedback time window is L1, a length of the 2nd first candidate time-domain resource is L2, and a length of the 3rd first candidate time-domain resource is L3. In this case, the start position of the 1st first candidate time-domain resource is Q, the start position of the 2nd first candidate time-domain resource is Q+L1+1, the start position of the 3rd first candidate time-domain resource is Q+L1+L2+1, and the start position of the 4-th first candidate time-domain resource is Q+L1+L2+L3+1.

It should be noted that in practical applications, when there is one start position, a resource interval L may be pre-configured between adjacent first candidate time-domain resources. For example, with the foregoing example still used, the start position of the 2nd first candidate time-domain resource may be Q+L1+1+L.

(211) In a case that the feedback time indication information includes start positions of a plurality of first candidate time-domain feedback resources, one start position corresponds to one of the first candidate time-domain feedback resources, that is, the start positions are in a one-to-one correspondence with the first candidate time-domain resources.

For example, it is assumed that the start positions include Q1, Q2, Q3, and Q4. In this case, the start position of the 1st first candidate time-domain resource is Q1, the start position of the 2nd first candidate time-domain resource is Q2, the start position of the 3rd first candidate time-domain resource is Q3, and the start position of the 4-th first candidate time-domain resource is Q4.

(22) In a case that the feedback time window includes a plurality of time units, and each time unit includes a plurality of the first candidate time-domain feedback resources, the feedback time indication information includes start positions of one or more first candidate time-domain feedback resources.

(220) In a case that the feedback time indication information includes a start position of a first candidate time-domain feedback resource, the start position is used to indicate a start position of a 1st first candidate time-domain feedback resource in each time unit.

(221) In a case that the feedback time indication information includes start positions of a plurality of first candidate time-domain feedback resources, one start position corresponds to one time unit, that is, each start position indicates the start position of the 1st first candidate time-domain feedback resource in a time unit.

(222) In a case that the feedback time indication information includes start positions of a plurality of first candidate time-domain feedback resources, each start position indicates a start position of each first candidate time-domain feedback resource in a time unit.

(3) A length of the first candidate time-domain feedback resource.

In a case that the feedback time window includes a plurality of first candidate time-domain feedback resources, one or more length values of the first candidate time-domain feedback resources may be included.

For example, when there are a plurality of first candidate time-domain feedback resources, lengths of all the first candidate time-domain feedback resources may be L1; alternatively, a length of the 1st first candidate time-domain resource is L1, a length of the 2nd first candidate time-domain resource is L2, a length of the 3rd first candidate time-domain resource is L3, ...; alternatively, lengths of the 1st and 3rd first candidate time-domain resources are L1, a length of the 2nd first candidate time-domain resource is L2; and so on, which are not limited in this embodiment.

(4) An end position of the first candidate time-domain feedback resource.

If the feedback time indication information (that is, the feedback time window) includes a plurality of first candidate time-domain resources, there may also be one or more end positions. In a case that the feedback time window includes a plurality of time units, and that each time unit includes a plurality of first candidate time-domain feedback resources, the feedback time indication information includes a plurality of end positions, where one end position corresponds to one time unit, or one end position corresponds to one of the first candidate time-domain feedback resources. For related descriptions, reference may be made to the detailed descriptions in the foregoing (2), and details are not repeated herein.

(5) A quantity of the first candidate time-domain feedback resources.

(6) A number or a set of numbers of the first candidate time-domain feedback resource.

The number may be 1-100, or the like. In this embodiment, a number or a set of numbers is used to indicate a target resource or a set of target resources.

(7) An offset value (such as K_{1,offset}).

The offset value includes an offset value of the first candidate time-domain feedback resource relative to a first reference point or an offset value of the feedback time window relative to the first reference point. Optionally, the offset value may be an offset value of a start position, or an offset value of an end position, or the like.

In practical applications, the first reference point may include one of the following.

(71) A subframe boundary (Boundary). For example, the boundary may be a start position or an end position of the subframe. In addition, the first reference point may alternatively be any time point of the subframe, which is not limited in this embodiment.

(72) A receiving occasion of DCI for activating a second target DL SPS.

(73) A receiving occasion of a first downlink data channel of the second target DL SPS.

(74) A feedback occasion of feedback information corresponding to a first downlink data channel of the second target DL SPS.

In the foregoing (72)-(74), the second target DL SPS may be a DL SPS with a smallest or largest identifier in the first target DL SPS, and a feedback occasion of feedback information corresponding to a downlink data channel of the second target DL SPS may be indicated in active DCI. It can be understood that when the terminal is configured with a plurality of DL SPS configuration resources, for ease of identification, each of the DL SPS is configured with a unique identifier.

In addition, a first downlink data channel may be but is not limited to a downlink physical shared channel PDSCH, and for example, may be a first PDSCH after active DCI (such as first DCI) is received.

(8) The feedback time indication information may further include a period (N_interval) of the first candidate time-domain feedback resource or a period of the feedback time window. The period may be an interval between two consecutive feedback time windows or may be an interval between two consecutive first candidate time-domain resources, which is not limited in this implementation.

It should be noted that the feedback time indication information provided in this embodiment may include one or more of the foregoing eight types of information or may include information that can be used to indicate a first candidate time-domain resource other than the foregoing eight types of information, which is not limited in this embodiment.

It should be understood that when the feedback time indication information includes only any one of the foregoing eight types of information, the terminal may determine the target time-domain resource according to a pre-configured target time-domain resource determining rule, or, the terminal may determine a target time-domain resource by using a method specified in a protocol or by using other existing indication information (such as indication in the active DCI or information indicated by other RRC configurations), which is not limited in this embodiment.

Example 1: Assuming that the feedback time indication information includes only a start position of a first candidate time-domain resource, the target time-domain resource determining rule may be a pre-configured length of a candidate time-domain resource, and the terminal may uniquely determine the target time-domain resource according to the start position and the pre-configured length of the candidate time-domain resource.

Example 2: Assuming that the feedback time indication information includes only a length of a first candidate time-domain resource, the target time-domain resource determining rule may be a pre-configured start position or/and end position of a candidate time-domain resource, and the terminal may uniquely determine the target time-domain resource according to the pre-configured start position or/and end position of the candidate time-domain resource and the length of the first candidate time-domain resource.

When the feedback time indication information includes only one of other information, for a manner of determining the target time-domain resource, reference may be made to detailed descriptions in Example 1 and Example 2, and details are not repeated herein in this embodiment.

Further, in a possible implementation, the first target DL SPS includes any one of the following (1) to (4).
(1) All DL SPSs configured for the terminal.
(2) DL SPS with a specified priority.

For example, the specified priority includes a highest priority (priority) and/or a lowest priority; or the specified priority is a priority = X; or the specified priority is a set of priorities, and the set of priorities includes a plurality of priorities.

During actual implementation, if the feedback time indication information sent by the network-side device is for a DL SPS with a priority = X, correspondingly, subsequent determining of a first reference point also corresponds to a DL SPS with the priority X.

It should be noted that a priority corresponding to a DL SPS configuration mentioned in the embodiments of this application may be a priority corresponding to an SPS PDSCH in the DL SPS configuration, or may be a priority of a HARQ-ACK corresponding to the SPS PDSCH in the DL SPS configuration, or may be a priority of a HARQ-ACK codebook corresponding to the SPS PDSCH in the DL SPS configuration.

(3) DL SPS with a specified identifier. For example, the specified identifier may be one or more identifiers specified by the network-side device.

(4) Active DL SPS. The foregoing active DL SPS may include but is not limited to a DCI activated through an active DCI corresponding to the first target DL SPS. In addition, the active DL SPS may mean all active DL SPSs configured by the terminal.

S320. Determine a target time-domain resource based on the feedback time indication information.

For S320, reference may be made to the detailed descriptions in S220 and S310. Moreover, in a possible implementation, still referring to FIG. 3, the determining a target time-domain resource according to the feedback time indication information in S320 may further include the following steps S3201 to S3203.

S3201. Determine a second candidate time-domain resource for the first feedback information based on an indication of the first DCI for the first target DL SPS in a case that the feedback time indication information includes the feedback time window.

The first DCI is DCI for activating the first target DL SPS. Optionally, the first DCI may be active DCI recently received by the terminal or active DCI corresponding to the first target DL SPS, which is not limited in this embodiment.

In practical applications, the first DCI may be further used to indicate a feedback time/occasion (that is, a second candidate time-domain resource) of first feedback information corresponding to the first target DL SPS. Correspondingly, if K1 (numerical, numerical) is indicated in the first DCI, it may be considered that the second candidate time-domain resource is indicated in the first DCI.

S3202. Determine the second candidate time-domain resource as the target time-domain resource in a case that the second candidate time-domain resource is within the feedback time window.

S3203. Determine one of the first candidate time-domain feedback resources within the feedback time window as the target time-domain resource in a case that the second candidate time-domain resource is not within the feedback time window.

In addition, in a case that the second candidate time-domain resource is not within the feedback time window and the feedback time window includes a plurality of the first candidate time-domain resources, one of the first candidate time-domain resources that is in a plurality of the first candidate time-domain resources and that is subsequent and closest to the second candidate time-domain resource is determined as the target time-domain resource.

In addition to that the second candidate time-domain resource is indicated in the foregoing first DCI for activating the first target DL SPS, in a possible implementation, the second DCI is received in a case that no third candidate time-domain resource (that can also be understood as the second candidate time-domain resource) is indicated in the first DCI.

When NNK1 (non-numerical, non-numerical K1) is indicated in the first DCI, it may be understood that no third candidate time-domain resource is indicated in the first DCI.

The second DCI is used to trigger feedback on a downlink data channel (such as a PDSCH) for the first target DL SPS. In this case, a fourth candidate time-domain resource indicated by the second DCI may be determined as the target time-domain resource, or the first candidate time-domain resource is determined as the target time-domain resource. It can be understood that whether to determine the fourth candidate time-domain resource or the first candidate time-domain resource as the target time-domain resource may be determined based on an indication from the network-side device or by referring to the descriptions in the foregoing S3201-S3203, which is not limited in this embodiment.

The second DCI may include at least one of the following: DCI including a downlink grant with downlink data channel scheduling, DCI including a downlink grant without downlink data channel scheduling (such as DL grant without PDSCH scheduling), DCI including an uplink grant with uplink data channel scheduling (such as UL grant with PUSCH scheduling), and DCI including an uplink grant without uplink data channel scheduling (such as UL grant without PUSCH scheduling).

In a possible implementation in this application, the second DCI may be scrambled by a preset radio network temporary identifier (Radio Network Temporary Identifier, RNTI), such as a CS-RNTI. The preset RNTI is transmitted according to SPS or semi-static transmission scheduling.

It should be noted that the terminal may perform some or all of the steps in S320 when determining the target time-domain resource, which is not limited in this embodiment.

Further, in one or more embodiments of this application, to ensure reliable transmission of data transmitted on a downlink, after determining the target time-domain resources, the terminal may perform the determining of whether the target time-domain resource collides with a time-domain resource for downlink transmission in S330, and if no, perform S340, or if yes, perform S350.

S330. Determine whether the target time-domain resource collides with a time-domain resource for downlink transmission.

The determining of whether the time-domain resources collide may be implemented by comparing whether the target time-domain resource is the same as the time-domain resource for downlink transmission, or whether the target time-domain resource falls within the time-domain resource for downlink transmission, or the like, which is not limited in this embodiment.

S340. Transmit the first feedback information on the target time-domain resource.

For related descriptions about S340, reference may be made to the detailed descriptions in the foregoing S230, and details are not repeated herein in this embodiment.

S350. Skip transmitting the first feedback information on the target time-domain resource.

After S350 of skipping transmitting the first feedback information, the first feedback information may be discarded directly, or the terminal may wait to transmit the first feedback information on a next target time-domain resource to ensure normal transmission of the first feedback information, which is not specifically limited in this embodiment.

It should be noted that the method 200 or 300 for transmitting feedback information provided in the embodiments of this application may be performed by an apparatus for transmitting feedback information, or by a control module, for performing the method 200 or 300 for transmitting feedback information, in the apparatus for transmitting feedback information. In subsequent descriptions, in an embodiment of this application, the apparatus for transmitting feedback information provided in this embodiment of this application is described by using an example in which the apparatus for transmitting feedback information performs the method 200 or 300 for transmitting feedback information.

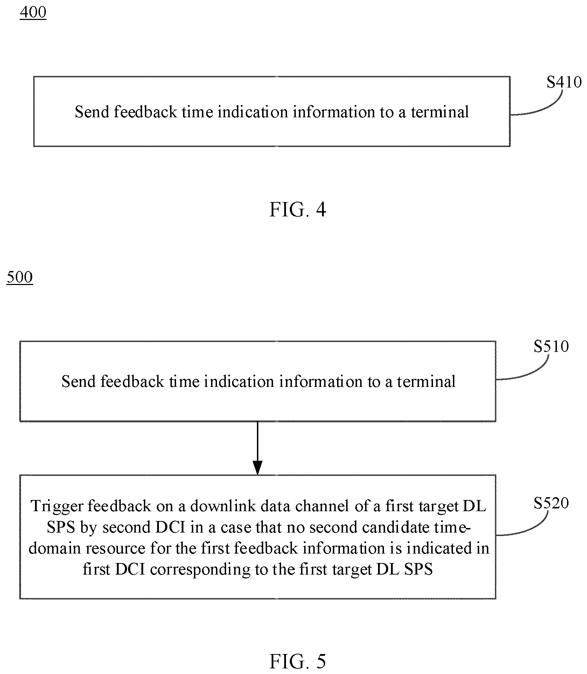

FIG. 4 is a schematic flowchart of a method 400 for indicating a feedback time according to an example embodiment of this application. The method 400 for indicating a feedback time may be performed by a network-side device, and specifically may be performed by hardware or/and software installed on the network-side device. Still referring to FIG. 4, the method may include at least the following steps.

S410. Send feedback time indication information to a terminal.

The feedback time indication information is used to indicate at least one first candidate time-domain feedback resource, the first candidate time-domain feedback resource is a candidate time-domain resource for transmission of first feedback information, the first feedback information is feedback information corresponding to a downlink data channel, and the downlink data channel is a data channel corresponding to a first target DL SPS configured for the terminal.

It should be noted that the network-side device may configure one or more DL SPS resources for the terminal or configure one DL SPS resource for a plurality of terminals, which is not limited in this embodiment.

For related descriptions about S410, reference may be made to the detailed descriptions in the foregoing S210 and S310. To avoid repetition, details are not repeated in this embodiment.

In the method 400 for indicating a feedback time provided in this embodiment, the network-side sends the feedback time indication information to the terminal to enable the terminal to determine a time-domain resource for transmission of the first feedback information based on the feedback time indication information. In this way, the following problem in the prior art can be avoided: A feedback time (that is, a time-domain resource) of feedback information (such as a HARQ-ACK) of each DL SPS configuration is indicated in separate active DCI, resulting that some feedback information (such as a HARQ-ACK for an SPS PDSCH) might always be discarded and SPS PDSCH performance degrades.

FIG. 5 is a schematic flowchart of a method 500 for indicating a feedback time according to an example embodiment of this application. The method 500 for indicating a feedback time may be performed by a network-side device, and specifically may be performed by hardware or/and software installed on the network-side device. Still referring to FIG. 5, the method may include at least the following steps.

S510. Send feedback time indication information to a terminal.

For S510, reference may be made to the detailed descriptions in S410. Moreover, in a possible implementation, the first target DL SPS includes any one of the following:
(1) all DL SPSs configured for the terminal;
(2) a DL SPS with a specified priority, where the specified priority includes a highest priority and/or a lowest priority; or the specified priority is a set of priorities, and the set of priorities includes a plurality of priorities;
(3) a DL SPS with a specified identifier, where the specified identifier is one or more identifiers specified by the network-side device; and
(4) an active DL SPS. The foregoing active DL SPS may be activated through, but not limited to, active DCI corresponding to the first target DL SPS.

In one or more embodiments of this application, the feedback time indication information includes any one of the following.
(1) A feedback time window, where the feedback time window includes the at least one first candidate time-domain feedback resource.
   Optionally, the feedback time window includes at least one time unit, and each time unit includes at least one of the first candidate time-domain feedback resources, where the time unit is slot, sub-slot, or subframe.
(2) A start position of the first candidate time-domain feedback resource.
   In a possible implementation, in a case that the feedback time window includes a plurality of time units, and that each time unit includes a plurality of first candidate time-domain feedback resources, the feedback time indication information includes a plurality of start positions or end positions, where one start position or end position corresponds to one time unit, or one start position or end position corresponds to one of the first candidate time-domain feedback resources.
(3) A length of the first candidate time-domain feedback resource. In a case that the feedback time window includes a plurality of first candidate time-domain feedback resources, one or more length values of the first candidate time-domain feedback resources are included.
(4) An end position of the first candidate time-domain feedback resource.
(5) A quantity of the first candidate time-domain feedback resources.
(6) A number or a set of numbers of the first candidate time-domain feedback resource.
(7) An offset value. The offset value includes an offset value of the first candidate time-domain feedback resource relative to a first reference point or an offset value of the feedback time window relative to the first reference point.

Optionally, the first reference point includes at least one of the following:
(71) a subframe boundary;
(72) a receiving occasion of DCI for activating a second target DL SPS, where the second target DL SPS is an active DL SPS with a smallest or largest identifier;
(73) a receiving occasion of a first downlink data channel of the second target DL SPS; and
(74) a feedback occasion of feedback information corresponding to a first downlink data channel of the second target DL SPS.

In the foregoing (72)-(74), the second target DL SPS is a DL SPS with a smallest or largest identifier in the first target DL SPS.

(8) A period of the first candidate time-domain feedback resource or a period of the feedback time window.

It should be noted that, for the feedback time indication information for the first target DL SPS and related descriptions about the feedback time indication information, reference may be made to the detailed descriptions in the foregoing method 300 for transmitting feedback information. To avoid repetition, details are not repeated herein in this implementation.

Further, in one or more embodiments of this application, that the network-side device sends feedback time indication information to a terminal includes sending the feedback time indication information to the terminal in one of the following manners:
(1) sending the feedback time indication information to the terminal by RRC;
(2) sending the feedback time indication information to the terminal by group common DCI; and
(3) sending the feedback time indication information to the terminal by DCI specific to the terminal.

It should be noted that, for detailed descriptions about the manner of transmitting the feedback time indication information, reference may be made to the detailed descriptions in the foregoing method 300 for transmitting feedback information. To avoid repetition, details are not repeated herein in this implementation.

S520. Trigger feedback on a downlink data channel of the first target DL SPS by second DCI in a case that no second candidate time-domain resource for the first feedback information is indicated in first DCI corresponding to the first target DL SPS.

The first DCI is DCI for activating the first target DL SPS.

Optionally, the second DCI includes any one of the following: DCI including a downlink grant with downlink data channel scheduling, DCI including a downlink grant without downlink data channel scheduling, DCI including an uplink grant with uplink data channel scheduling, and DCI including an uplink grant without uplink data channel scheduling.

The second DCI is used to activate feedback on a downlink data channel of a third target DL SPS, the third target DL SPS includes the first target DL SPS, and the third target DL SPS includes any one of the following:
(1) all active DL SPSs in the DL SPS configured by the terminal;
(2) an active DL SPS configured by the terminal and having a specified priority; and
(3) one or more active DL SPSs specified.

In addition, the second DCI is further used to indicate a fourth candidate time-domain resource for transmission of the first feedback information.

For related descriptions about S520, reference may be made to the detailed descriptions in the method 200 or 300 for transmitting feedback information, and details are not repeated in this embodiment.

It should be noted that the method 400 or 500 for indicating a feedback time provided in this embodiment of this application may be performed by an apparatus for indicating a feedback time, or by a control module, for performing the method 400 or 500 for indicating a feedback time, in the apparatus for indicating a feedback time. In subsequent descriptions, in an embodiment of this application, the apparatus for indicating a feedback time provided in this embodiment of this application is described by using an example in which the apparatus for indicating a feedback time performs the method 400 or 500 for indicating a feedback time.

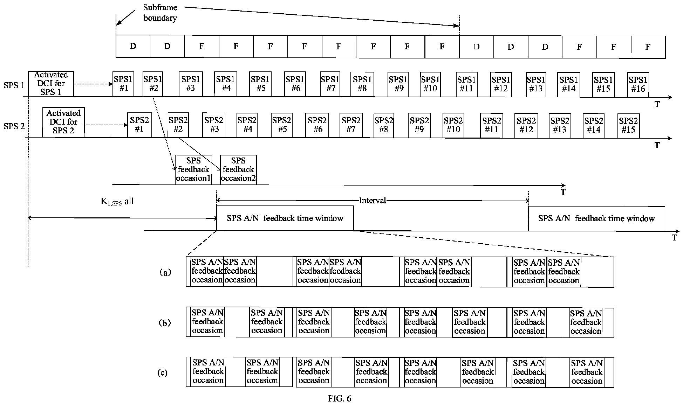

Based on the descriptions of the method 200 or 300 for transmitting feedback information and the method 400 or 500 for indicating a feedback time, the following further describes the foregoing methods with reference to specific embodiments. #1, #2, #3, #4, ... shown in FIG. 6 to FIG. 11 respectively represent a corresponding SPS PDSCH, SPS feedback occasion 1 is a second candidate time-domain resource indicated by first DCI (active DCI), and the SPS A/N feedback resource is the first candidate time-domain resource indicated by the feedback time indication information.

### Embodiment 1

As shown in FIG. 6, it is assumed that a terminal is configured with two DL SPS configuration resources SPS 1 and SPS 2, first feedback information is HARQ-ACK, a feedback time (that is, a second candidate time-domain resource) of the HARQ-ACK for SPS 1 indicated by first DCI is K1=1 slot, and an SPS 2 HARQ-ACK feedback time is K1=2 slots. K_{1,SPS} is configured by RRC, and a first reference point is a subframe boundary (subframe boundary).

A network-side device configures all DL SPSs, that is, a feedback time window included in the feedback time indication information is a HARQ-ACK feedback time window shared by SPS 1 and SPS 2. The feedback time window includes 4 consecutive time slots, and each time slot includes candidate opportunities (that is, first candidate time-domain resources) for HARQ-ACK feedbacks of the two SPSs.

A network configures an offset value K_{1,SPS} relative to a receiving occasion of active DCI for an SPS, that is, SPS 1, with a smallest number in an SPS configuration, to determine a start position of the HARQ-ACK feedback time window. An interval between two HARQ-ACK feedback time windows is configured by RRC.

For SPS PDSCH #2 of SPS 1, corresponding HARQ-ACK feedback occasion 1 is not located within the SPS HARQ-ACK feedback time window, and the terminal does not feed back the HARQ-ACK for SPS 1 PDSCH #2 at HARQ-ACK feedback occasion 1; and the terminal feeds back the HARQ-ACK for SPS 1 PDSCH #2 within the SPS HARQ-ACK feedback time window.

For SPS PDSCH #2 of SPS 2, corresponding HARQ-ACK feedback occasion 2 is located within the SPS HARQ-ACK feedback time window, and the terminal feeds back the HARQ-ACK for SPS 2 PDSCH #2 at HARQ-ACK feedback occasion 2.

It should be noted that (a), (b), and (c) shown in FIG. 6 respectively indicate that each feedback time window includes N consecutive SPS HARQ-ACK feedback resources (that is, the first candidate time-domain resources) with a same length, that each feedback time window includes N non-consecutive SPS HARQ-ACK feedback resources with a same length, and that each feedback time window includes N non-consecutive SPS HARQ-ACK feedback resources with different lengths.

### Embodiment 2

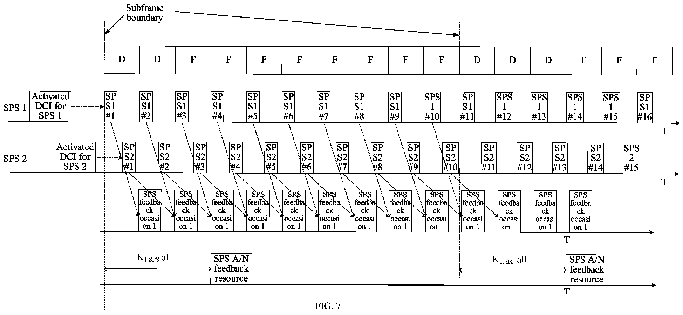

As shown in FIG. 7, a terminal is configured with two DL SPS configuration resources SPS 1 and SPS 2, and first feedback information is a HARQ-ACK. K_{1,SPS} is configured by RRC, and a first reference point is a subframe boundary.

A network-side device configures all DL SPSs, that is, a common HARQ-ACK candidate opportunity (a first candidate time-domain resource) for SPS 1 and SPS 2. An offset value of the HARQ-ACK candidate opportunity relative to the subframe boundary is K_{1,SPS}.

For PDSCHs of SPS 1 and SPS 2, the terminal feeds back the HARQ-ACK for an SPS PDSCH at feedback occasion 1 corresponding to an SPS A/N feedback resource.

### Embodiment 3

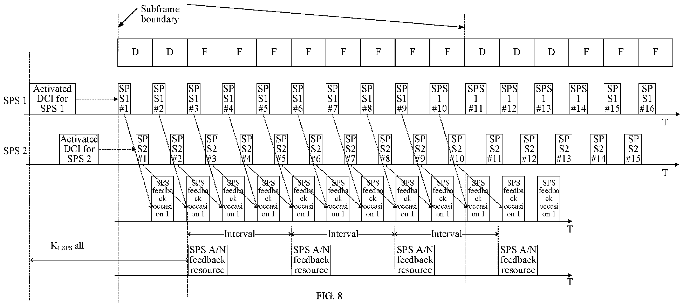

As shown in FIG. 8, a terminal is configured with two DL SPS configuration resources SPS 1 and SPS 2, and first feedback information is a HARQ-ACK. K_{1,SPS} is configured by RRC, a first reference point is a receiving occasion of active DCI for activating an SPS with a smallest number (lowest index), and an interval is configured by RRC.

A network-side device configures all SPSs, that is, a common HARQ-ACK candidate opportunity (a first candidate time-domain resource) for SPS 1 and SPS 2. An offset value of the HARQ-ACK candidate opportunity relative to a receiving occasion of active DCI (first DCI) for an SPS (that is, SPS 1) with a lowest number in the SPS configuration is K_{1,SPS}, and an interval between two SPS HARQ-ACK feedback occasions is configured by RRC.

For PDSCHs of SPS 1 and SPS 2, the terminal feeds back the HARQ-ACK for an SPS PDSCH at feedback occasion 1 corresponding to an SPS A/N feedback resource.

### Embodiment 4

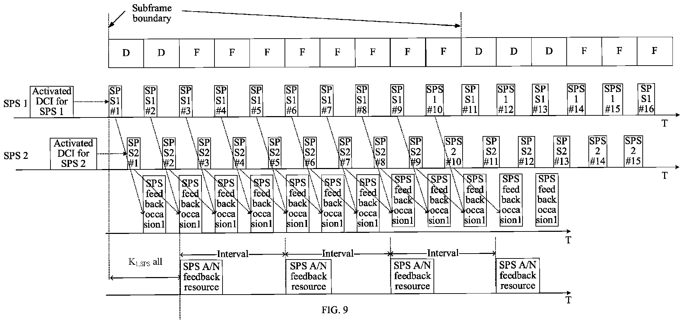

As shown in FIG. 9, a terminal is configured with two DL SPS configuration resources SPS 1 and SPS 2, and first feedback information is a HARQ-ACK. K_{1,SPS} is configured by RRC, a first reference point is a receiving occasion of a first PDSCH of an active lowest index SPS, and an interval is configured by RRC.

A network-side device configures all SPSs, that is, a common HARQ-ACK candidate opportunity (a first candidate time-domain resource) for SPS 1 and SPS 2. An offset value of the HARQ-ACK feedback time-domain resource relative to a receiving occasion of a first SPS PDSCH of an SPS (that is, SPS 1) with a smallest number in the SPS configuration is K_{1,SPS}, and an interval between two SPS HARQ-ACK feedback occasions is configured by RRC.

For PDSCHs of SPS 1 and SPS 2, the terminal feeds back the HARQ-ACK for an SPS PDSCH at feedback occasion 1 corresponding to an SPS A/N feedback resource.

### Embodiment 5

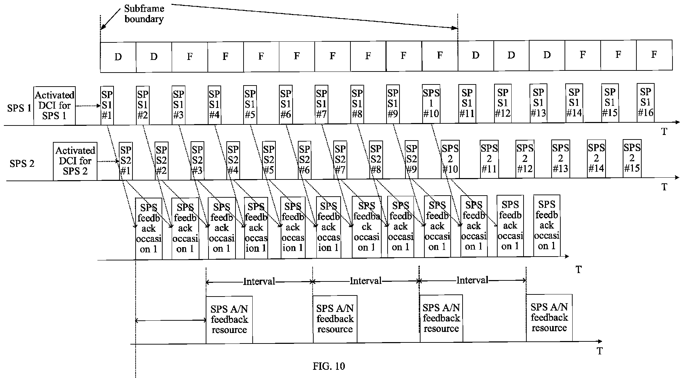

As shown in FIG. 10, a terminal is configured with two DL SPS configuration resources SPS 1 and SPS 2, and first feedback information is a HARQ-ACK. K_{1,SPS} is configured by RRC, a first reference point is a feedback occasion of a HARQ-ACK for a first PDSCH of an active lowest index SPS that is determined based on K1 indicated in active DCI, and an interval is configured by RRC.

A network-side device configures all SPSs, that is, a common HARQ-ACK feedback time-domain resource (a first candidate time-domain resource) for SPS 1 and SPS 2. An offset value of the HARQ-ACK feedback time-domain resource relative to a HARQ-ACK feedback occasion corresponding to a first SPS PDSCH of an SPS (that is, SPS 1) with a smallest number in the SPS configuration is K_{1,SPS}, and an interval between two SPS HARQ-ACK feedback occasions is configured by RRC. The HARQ-ACK feedback occasion corresponding to the first SPS PDSCH is determined based on K1 indicated in the active DCI.

For PDSCHs of SPS 1 and SPS 2, the terminal may feed back the HARQ-ACK for an SPS PDSCH at feedback occasion 1 corresponding to an SPS A/N feedback resource.

### Embodiment 6

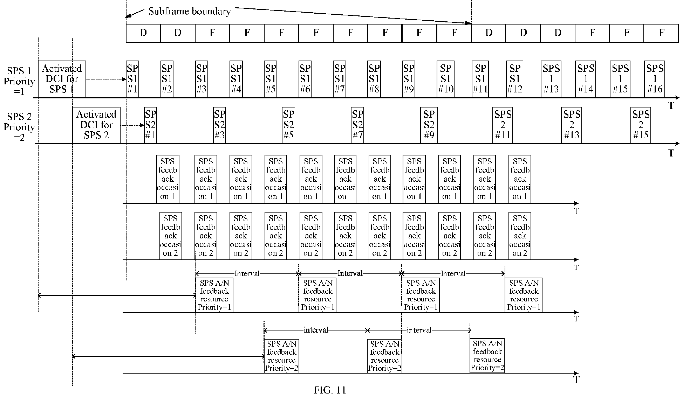

As shown in FIG. 11, a terminal is configured with two DL SPS configuration resources SPS 1 and SPS 2. a priority corresponding to SPS 1 is 1, a priority corresponding to SPS 2 is 2, and first feedback information is a HARQ-ACK. K_{1,SPS} is configured by RRC, a first reference point is a receiving occasion of active DCI for activating an SPS with the priority of 1, and an interval (Interval, that is, a period) is configured by RRC. K_{1,SPS} priority of 2 is configured by RRC, a first reference point is a receiving occasion of active DCI for activating an SPS with the priority of 2, and an interval is configured by RRC.

A network-side device configures SPS HARQ-ACK feedback time-domain resources (first candidate time-domain resources) corresponding to the priority of 1 and the priority of 2, respectively.

For the priority of 1, an offset value of the HARQ-ACK feedback time-domain resource relative to a receiving occasion of active DCI (first DCI) for an SPS (that is, SPS 1) with a lowest number in the SPS configuration with the priority of 1 is K_{1,SPS}, priority = 1.

For the priority of 2, an offset value of the HARQ-ACK feedback time-domain resource relative to a receiving occasion of active DCI for an SPS (that is, SPS 2) with a lowest number in the SPS configuration with the priority of 2 is K_{1,SPS}, priority = 2.

An interval between two SPS HARQ-ACK feedback occasions is configured by RRC.

For a PDSCH of SPS 1, the terminal feeds back the HARQ-ACK for the SPS 1 PDSCH at feedback occasion 1 corresponding to an SPS A/N feedback resource with a priority of 1.

For a PDSCH of SPS 2, the terminal feeds back the HARQ-ACK for the SPS 2 PDSCH at feedback occasion 2 corresponding to an SPS A/N feedback resource with a priority of 2.

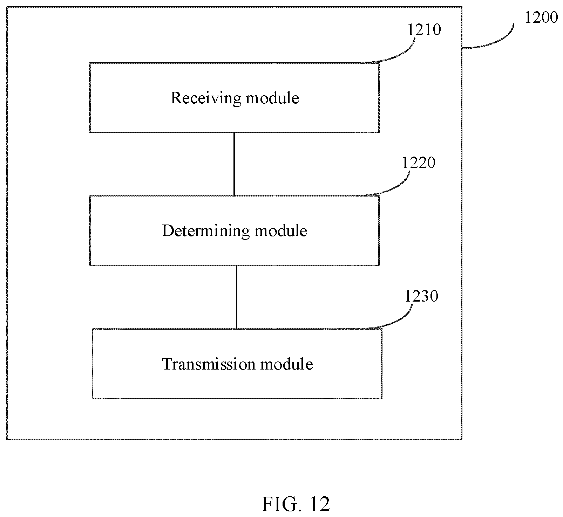

FIG. 12 is a schematic block diagram of an apparatus 1200 for transmitting feedback information according to an example embodiment of this application. The apparatus 1200 may be a terminal, or may be located in the terminal. Still referring to FIG. 12, the apparatus 1200 includes: a receiving module 1210, configured to receive feedback time indication information, where the terminal is configured with at least one DL SPS configuration resource, the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel of a first target DL SPS, and the first target DL SPS is at least one of the at least one DL SPS; a determining module 1220, configured to determine a target time-domain resource based on the feedback time indication information; and a transmission module 1230, configured to transmit the first feedback information on the target time-domain resource.

In one or more embodiments of this application, the first target DL SPS includes at least one of the following: all DL SPSs configured for the terminal; a DL SPS with a specified priority; a DL SPS with a specified identifier; and an active DL SPS.

In one or more embodiments of this application, the specified priority includes a highest priority and/or a lowest priority; or the specified priority is a set of priorities, and the set of priorities includes a plurality of priorities.

In one or more embodiments of this application, the specified identifier is one or more identifiers specified by the network-side device.

In one or more embodiments of this application, the feedback time indication information includes at least one of the following: a feedback time window, where the feedback time window includes the at least one first candidate time-domain feedback resource; a start position of the first candidate time-domain feedback resource; a length of the first candidate time-domain feedback resource; an end position of the first candidate time-domain feedback resource; a quantity of the first candidate time-domain feedback resources; a number or a set of numbers of the first candidate time-domain feedback resource; and an offset value.

In one or more embodiments of this application, the offset value includes an offset value of the first candidate time-domain feedback resource relative to a first reference point or an offset value of the feedback time window relative to the first reference point.

In one or more embodiments of this application, the first reference point includes at least one of the following: a subframe boundary, a receiving occasion of DCI for activating a second target DL SPS; a receiving occasion of a first downlink data channel of the second target DL SPS; and a feedback occasion of feedback information corresponding to a first downlink data channel of the second target DL SPS, where the second target DL SPS is a DL SPS with a smallest or largest identifier in the first target DL SPS.

In one or more embodiments of this application, the feedback time indication information further includes a period of the first candidate time-domain feedback resource or a period of the feedback time window.

In one or more embodiments of this application, the feedback time window includes at least one time unit, and each time unit includes at least one of the first candidate time-domain feedback resources, where the time unit is slot, sub-slot, or subframe.

In one or more embodiments of this application, in a case that the feedback time window includes a plurality of time units, and that each time unit includes a plurality of first candidate time-domain feedback resources, the feedback time indication information includes a plurality of start positions or end positions, where one start position or end position corresponds to one time unit, or one start position or end position corresponds to one of the first candidate time-domain feedback resources.

In one or more embodiments of this application, in a case that the feedback time window includes a plurality of first candidate time-domain feedback resources, one or more length values of the first candidate time-domain feedback resources are included.

In one or more embodiments of this application, that the determining module 1220 determines a target time-domain resource based on the feedback time indication information includes: determining a second candidate time-domain resource for the first feedback information based on an indication of the first DCI for the first target DL SPS in a case that the feedback time indication information includes the feedback time window, where the first DCI is DCI for activating the first target DL SPS; and determining the second candidate time-domain resource as the target time-domain resource in a case that the second candidate time-domain resource is within the feedback time window.

In one or more embodiments of this application, that the determining module 1220 determines a target time-domain resource based on the feedback time indication information further includes: determining one of the first candidate time-domain feedback resources within the feedback time window as the target time-domain resource in a case that the second candidate time-domain resource is not within the feedback time window.

In one or more embodiments of this application, the receiving module 1210 is further configured to receive second DCI in a case that no third candidate time-domain resource is indicated in first DCI for activating the first target DL SPS, where the second DCI is used to trigger feedback on a downlink data channel of the first target DL SPS.

In one or more embodiments of this application, the determining module 1220 determining a target time-domain resource based on the feedback time indication information further includes: determining a fourth candidate time-domain resource indicated by the second DCI as the target time-domain resource, or determining the first candidate time-domain resource as the target time-domain resource.

In one or more embodiments of this application, the second DCI includes at least one of the following: DCI including a downlink grant with downlink data channel scheduling, DCI including a downlink grant without downlink data channel scheduling, DCI including an uplink grant with uplink data channel scheduling, and DCI including an uplink grant without uplink data channel scheduling.

In one or more embodiments of this application, the second DCI is scrambled by a preset RNTI.

In one or more embodiments of this application, the transmission module 1230 is further configured to skip transmitting the first feedback information on the target time-domain resource in a case that the target time-domain resource collides with a time-domain resource for downlink transmission.

In one or more embodiments of this application, the first feedback information is feedback information for some or all of HARQ processes for the first target DL SPS.

In one or more embodiments of this application, that the receiving module 1210 receives feedback time indication information includes: receiving the feedback time indication information sent in one of the following manners: sending the feedback time indication information to the terminal by RRC; sending the feedback time indication information to the terminal by group common DCI; and sending the feedback time indication information to the terminal by DCI specific to the terminal.

The apparatus 1200 for transmitting feedback information in this embodiment of this application may be an apparatus, or may be a component, an integrated circuit, or a chip in a terminal. The apparatus 1200 may be a mobile terminal or a non-mobile terminal. For example, the mobile terminal may include but is not limited to the foregoing illustrated types of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The apparatus 1200 for transmitting feedback information in this embodiment of this application may be an apparatus with an operating system. The operating system may be an Android (Android) operating system, may be an iOS operating system, or may be another possible operating system. This is not specifically limited in this embodiment of this application.

The apparatus 1200 for transmitting feedback information provided in this embodiment of this application can implement the processes implemented in the method embodiments in FIG. 2 and FIG. 3, with the same technical effects achieved. To avoid repetition, details are not described herein again.

Optionally, FIG. 13 is a schematic diagram of a hardware structure of a terminal for implementing the embodiments of this application. The terminal 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art can understand that the terminal 1300 may further include a power supply (for example, a battery) that supplies power to various components. The power supply may be logically connected to the processor 1310 through a power management system, so that functions such as charge and discharge management and power consumption management are implemented by using the power management system. The terminal is not limited to the terminal structure shown in FIG. 13. The terminal may include more or fewer components than shown in the figure, or combine some of the components, or arrange the components differently. Details are not described herein.

It should be understood that in this embodiment of this application, the input unit 1304 may include a graphics processing unit (Graphics Processing Unit, GPU) 13041 and a microphone 13042. The graphics processing unit 13041 processes image data of a static picture or a video that is obtained by an image capture apparatus (for example, a camera) in a video capture mode or an image capture mode. The display unit 1306 may include the display panel 13061. The display panel 13061 may be configured in a form of a liquid crystal display, an organic light-emitting diode, or the like. The user input unit 1307 includes a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function button (for example, a volume control button or a power button), a trackball, a mouse, and a joystick. Details are not described herein.

In this embodiment of this application, the radio frequency unit 1301 sends downlink information received from a network-side device to the processor 1310 for processing, and in addition, sends uplink data to the network-side device. Generally, the radio frequency unit 1301 includes but is not limited to an antenna, at least one amplifier, a transceiver, a coupler, a low noise amplifier, and a duplexer.

The memory 1309 may be configured to store software programs or instructions and various data. The memory 1309 may mainly include a program or instructions storage area and a data storage area. The program or instructions storage area may store an operating system, an application program or instructions required by at least one function (for example, an audio play function or an image play function), and the like. In addition, the memory 1309 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1310 may include one or more processing units. Optionally, the processor 1310 may integrate an application processor and a modem processor. The application processor mainly processes an operating system, a user interface, an application program or instructions, and the like. The modem processor mainly processes wireless communication, and for example, may be a baseband processor. It can be understood that the modem processor may alternatively be not integrated into the processor 1310.

The processor 1310 is configured to: receive feedback time indication information, where the terminal is configured with at least one DL SPS configuration resource, the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel of a first target DL SPS, and the first target DL SPS is at least one of the at least one DL SPS; determine a target time-domain resource based on the feedback time indication information; and transmit the first feedback information on the target time-domain resource.

In this embodiment, the terminal receives the feedback time indication information sent by the network-side device and determines the target time-domain resource for transmission of the first feedback information based on the feedback time indication information. In this way, the following problem in the prior art can be avoided: A feedback time (that is, a time-domain resource) of feedback information (such as a HARQ-ACK) of each DL SPS configuration is indicated in separate active DCI, resulting that feedback information of different DL SPS configurations might be fed back on different feedback time and further resulting that some feedback information (such as a HARQ-ACK for an SPS PDSCH) may always be discarded and SPS PDSCH performance degrades.

FIG. 14a is a schematic block diagram of an apparatus 1400 for indicating a feedback time according to an example embodiment of this application. The apparatus 1400 may be a network-side device, or may be located in the network-side device. Still referring to FIG. 14a, the apparatus 1400 includes: a sending module 1410, configured to send feedback time indication information to a terminal, where the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel, and the downlink data channel is a data channel corresponding to a first target DL SPS configured for the terminal.

In one or more embodiments of this application, the first target DL SPS includes at least one of the following: all DL SPSs configured for the terminal; a DL SPS with a specified priority; a DL SPS with a specified identifier; and an active DL SPS.

In one or more embodiments of this application, the specified priority includes a highest priority and/or a lowest priority; or the specified priority is a set of priorities, and the set of priorities includes a plurality of priorities.

In one or more embodiments of this application, the specified identifier is one or more identifiers specified by the network-side device.

In one or more embodiments of this application, the feedback time indication information includes at least one of the following: a feedback time window, where the feedback time window includes the at least one first candidate time-domain feedback resource; a start position of the first candidate time-domain feedback resource; a length of the first candidate time-domain feedback resource; an end position of the first candidate time-domain feedback resource; a quantity of the first candidate time-domain feedback resources; a number or a set of numbers of the first candidate time-domain feedback resource; and an offset value.

In one or more embodiments of this application, the offset value includes an offset value of the first candidate time-domain feedback resource relative to a first reference point or an offset value of the feedback time window relative to the first reference point.

In one or more embodiments of this application, the first reference point includes at least one of the following: a subframe boundary, a receiving occasion of DCI for activating a second target DL SPS, where the second target DL SPS is an active DL SPS with a smallest or largest identifier; a receiving occasion of a first downlink data channel of the second target DL SPS; and a feedback occasion of feedback information corresponding to a first downlink data channel of the second target DL SPS, where the second target DL SPS is a DL SPS with a smallest or largest identifier in the first target DL SPS.

In one or more embodiments of this application, the feedback time indication information further includes a period of the first candidate time-domain feedback resource or a period of the feedback time window.

In one or more embodiments of this application, the feedback time window includes at least one time unit, and each time unit includes at least one of the first candidate time-domain feedback resources, where the time unit is slot, sub-slot, or subframe.

In one or more embodiments of this application, in a case that the feedback time window includes a plurality of time units, and that each time unit includes a plurality of first candidate time-domain feedback resources, the feedback time indication information includes a plurality of start positions or end positions, where one start position or end position corresponds to one time unit, or one start position or end position corresponds to one of the first candidate time-domain feedback resources.

In one or more embodiments of this application, in a case that the feedback time window includes a plurality of first candidate time-domain feedback resources, one or more length values of the first candidate time-domain feedback resources are included.

In one or more embodiments of this application, that the sending module 1410 sends feedback time indication information to a terminal includes sending the feedback time indication information to the terminal in one of the following manners: sending the feedback time indication information to the terminal by radio resource control RRC; sending the feedback time indication information to the terminal by group common DCI; and sending the feedback time indication information to the terminal by DCI specific to the terminal.

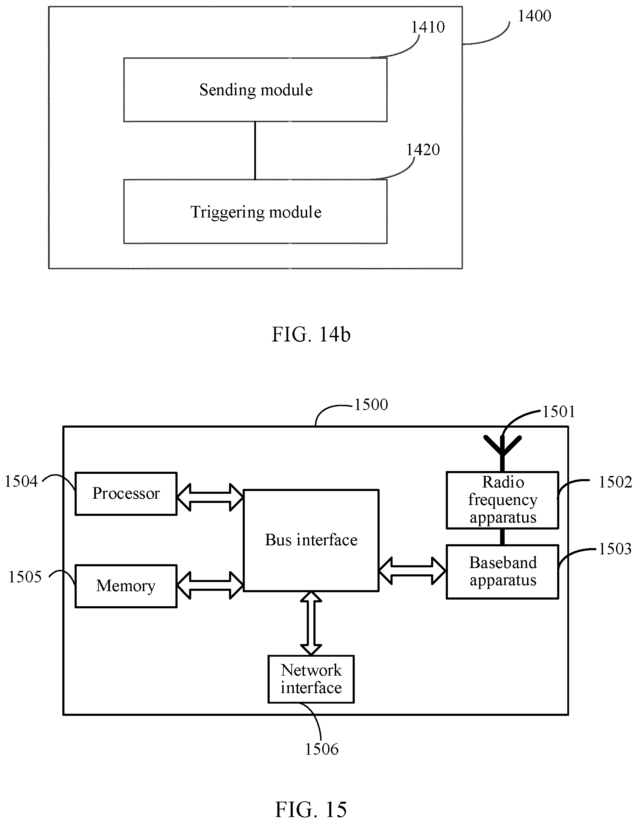

In one or more embodiments of this application, as shown in FIG. 14b, the apparatus 1400 further includes a triggering module 1420, configured to trigger feedback on a downlink data channel for the first target DL SPS by second DCI in a case that no second candidate time-domain resource for the first feedback information is indicated in the first DCI corresponding to the first target DL SPS, where the first DCI is DCI for activating the first target DL SPS.

In one or more embodiments of this application, the second DCI includes at least one of the following: DCI including a downlink grant with downlink data channel scheduling, DCI including a downlink grant without downlink data channel scheduling, DCI including an uplink grant with uplink data channel scheduling, and DCI including an uplink grant without uplink data channel scheduling.

In one or more embodiments of this application, the second DCI is used to activate feedback on a downlink data channel of a third target DL SPS, the third target DL SPS includes the first target DL SPS, and the third target DL SPS includes any one of the following: all active DL SPSs in the DL SPS configured by the terminal; an active DL SPS configured by the terminal and having a specified priority; and one or more active DL SPSs specified.

In one or more embodiments of this application, the second DCI is further used to indicate a fourth candidate time-domain resource for transmission of the first feedback information.

As shown in FIG. 15, an example embodiment of this application further provides a network-side device, where the network-side device 1500 includes an antenna 1501, a radio frequency apparatus 1502, and a baseband apparatus 1503. The antenna 1501 is connected to the radio frequency apparatus 1502. In an uplink direction, the radio frequency apparatus 1502 receives information by using the antenna 1501, and transmits the received information to the baseband apparatus 1503 for processing. In a downlink direction, the baseband apparatus 1503 processes to-be-transmitted information, and transmits the information to the radio frequency apparatus 1502; and the radio frequency apparatus 1502 processes the received information and then transmits the information by using the antenna 1501.

The frequency band processing apparatus may be located in the baseband apparatus 1503. The method performed by the network-side device in the foregoing embodiment may be implemented in the baseband apparatus 1503, and the baseband apparatus 1503 includes a processor 1504 and a memory 1505.

The baseband apparatus 1503 may include, for example, at least one baseband processing unit, where a plurality of chips are disposed on the baseband processing unit. As shown in FIG. 15, one of the chips is, for example, the processor 1504, and is connected to the memory 1505, to invoke the program in the memory 1505 to perform the operations of the network device shown in the foregoing method embodiment.

The baseband apparatus 1503 may further include a network interface 1506, configured to exchange information with the radio frequency apparatus 1502, where the interface is, for example, a common public radio interface (common public radio interface, CPRI for short).

Specifically, the network-side device in this embodiment of the present invention further includes instructions or a program stored in the memory 1505 and capable of running on the processor 1504. The processor 1504 invokes the instructions or program in the memory 1505 to perform the method performed by the modules shown in FIG. 14a or FIG. 14b, with the same technical effects achieved. To avoid repetition, details are not described herein again.

An embodiment of this application further provides a readable storage medium, where the readable storage medium stores a program or instructions. When the program or instructions are executed by a processor, the processes of the foregoing embodiments of the method for transmitting feedback information are implemented, or when the program or instructions are executed by a processor, the processes of the foregoing embodiments of the method for indicating a feedback time are implemented, with the same technical effects achieved. To avoid repetition, details are not described herein again.

The processor is the processor of the terminal or the network-side device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip, where the chip includes a processor and a communications interface, the communications interface is coupled to the processor, and the processor is configured to run a program or instructions for a network-side device to implement the processes of the foregoing embodiments of the method for transmitting feedback information, or to implement the processes of the foregoing embodiments of the method for indicating a feedback time, with the same technical effects achieved. To avoid repetition, details are not described herein again.

It should be understood that the chip mentioned in this embodiment of this application may also be referred to as a system-on-chip, a system chip, a chip system, or the like.

It should be noted that the terms "comprise", "include", or any of their variants in this specification are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In the absence of more restrictions, an element defined by "including a ..." does not exclude another same element in a process, method, article, or apparatus that includes the element. In addition, it should be noted that the scope of the methods and apparatuses in the embodiments of this application is not limited to performing functions in the order shown or discussed, but may further include performing functions at substantially the same time or in reverse order depending on the involved functions. For example, the described method may be performed in an order different from the described order, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The embodiments of this application are described above with reference to the accompanying drawings, but this application is not limited to the foregoing implementations. The foregoing implementations are only illustrative rather than restrictive. Inspired by this application, persons of ordinary skill in the art can still derive many variations without departing from the protection scope of the claims. All these variations shall fall within the protection of this application.

## Claims

1. A method for transmitting feedback information, applied to a terminal, wherein the method comprises:
receiving (S210) feedback time indication information, wherein the terminal is configured with at least two downlink semi-persistent schedulings, DL SPSs, configuration resource, the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel of a first target DL SPS, and the first target DL SPS is at least one of the at least two DL SPSs;
determining (S220) a target time-domain resource based on the feedback time indication information; and
transmitting (S230) the first feedback information on the target time-domain resource;
**characterized in that** the feedback time indication information comprises:
an offset value, wherein the offset value comprises an offset value of the first candidate time-domain feedback resource relative to a first reference point;
wherein the first reference point comprises one of the following:
a receiving occasion of DCI for activating a second target DL SPS;
a receiving occasion of a first downlink data channel of the second target DL SPS; and
a feedback occasion of feedback information corresponding to a first downlink data channel of the second target DL SPS;
wherein the second target DL SPS is a DL SPS with a smallest or largest identifier in the first target DL SPS.

2. The method according to claim 1, wherein the first target DL SPS comprises at least one of the following:
all DL SPSs configured for the terminal;
a DL SPS with a specified priority;
a DL SPS with a specified identifier; and
an active DL SPS.

3. The method according to claim 2, wherein the specified priority comprises a highest priority and/or a lowest priority; or the specified priority is a set of priorities, and the set of priorities comprises a plurality of priorities.

4. The method according to claim 2, wherein the feedback time indication information further comprises at least one of the following:
a feedback time window, wherein the feedback time window comprises the at least one first candidate time-domain feedback resource;
a start position of the first candidate time-domain feedback resource;
a length of the first candidate time-domain feedback resource;
an end position of the first candidate time-domain feedback resource;
a quantity of the first candidate time-domain feedback resources; and
a number or a set of numbers of the first candidate time-domain feedback resource.

5. The method according to claim 4, wherein the feedback time window comprises at least one time unit, and each time unit comprises at least one of the first candidate time-domain feedback resources, wherein the time unit is slot, sub-slot, or subframe.

6. The method according to any one of claims 1 to 5, wherein the method further comprises:
skipping transmitting the first feedback information on the target time-domain resource in a case that the target time-domain resource collides with a time-domain resource for downlink transmission.

7. The method according to any one of claims 1 to 5, wherein the first feedback information is feedback information for some or all of HARQ processes for the first target DL SPS.

8. The method according to any one of claims 1 to 5, wherein the receiving feedback time indication information comprises receiving the feedback time indication information sent in one of the following manners:
sending the feedback time indication information to the terminal by radio resource control RRC;
sending the feedback time indication information to the terminal by group common DCI; and
sending the feedback time indication information to the terminal by DCI specific to the terminal.

9. An apparatus (1200) for transmitting feedback information, applied to a terminal, wherein the apparatus comprises:
a receiving module (1210), configured to receive feedback time indication information, wherein the terminal is configured with at least two DL SPSs configuration resource, the feedback time indication information is used to indicate at least one first candidate time-domain feedback resource, the first candidate time-domain feedback resource is a candidate time-domain resource for transmission of first feedback information, the first feedback information is feedback information corresponding to a downlink data channel of a first target DL SPS, and the first target DL SPS is at least one of the at least two DL SPSs;
a determining module (1220), configured to determine a target time-domain resource based on the feedback time indication information; and
a transmission module (1230), configured to transmit the first feedback information on the target time-domain resource;
**characterized in that** the feedback time indication information comprises:
an offset value, wherein the offset value comprises an offset value of the first candidate time-domain feedback resource relative to a first reference point;
wherein the first reference point comprises one of the following:
a receiving occasion of DCI for activating a second target DL SPS;
a receiving occasion of a first downlink data channel of the second target DL SPS; and
a feedback occasion of feedback information corresponding to a first downlink data channel of the second target DL SPS;
wherein the second target DL SPS is a DL SPS with a smallest or largest identifier in the first target DL SPS.

10. The apparatus according to claim 9, wherein the first target DL SPS comprises at least one of the following:
all DL SPSs configured for the terminal;
a DL SPS with a specified priority;
a DL SPS with a specified identifier; and
an active DL SPS.

11. The apparatus according to claim 10, wherein the specified priority comprises a highest priority and/or a lowest priority; or the specified priority is a set of priorities, and the set of priorities comprises a plurality of priorities.

12. The apparatus according to claim 9, wherein the feedback time indication information further comprises at least one of the following:
a feedback time window, wherein the feedback time window comprises the at least one first candidate time-domain feedback resource;
a start position of the first candidate time-domain feedback resource;
a length of the first candidate time-domain feedback resource;
an end position of the first candidate time-domain feedback resource;
a quantity of the first candidate time-domain feedback resources; and
a number or a set of numbers of the first candidate time-domain feedback resource;
wherein the feedback time window comprises at least one time unit, and each time unit comprises at least one of the first candidate time-domain feedback resources, wherein the time unit is slot, sub-slot, or subframe.

13. The apparatus according to any one of claims 9 to 12, wherein the transmission module (1230) is further configured to skip transmitting the first feedback information on the target time-domain resource in a case that the target time-domain resource collides with a time-domain resource for downlink transmission.

14. The apparatus according to any one of claims 9 to 12, wherein the first feedback information is feedback information for some or all of HARQ processes for the first target DL SPS.

15. The apparatus according to any one of claims 9 to 12, wherein that the receiving module (1210) receives feedback time indication information comprises receiving the feedback time indication information sent in one of the following manners:
sending the feedback time indication information to the terminal by RRC;
sending the feedback time indication information to the terminal by group common DCI; and
sending the feedback time indication information to the terminal by DCI specific to the terminal.

## Patentansprüche

1. Verfahren zur Übertragung von Rückkopplungsinformationen, das auf ein Endgerät angewendet wird, wobei das Verfahren Folgendes umfasst:
Empfangen (S210) von Rückkopplungszeit-Anzeigeinformationen, wobei das Endgerät mit einer Konfigurationsressource von mindestens zwei Downlink halbpersistente Planungen, DL SPSs, ausgelegt ist, wobei die Rückkopplungszeit-Anzeigeinformationen zum Anzeigen mindestens einer ersten Kandidaten-Zeitbereichs-Rückkopplungsressource verwendet werden, wobei die erste Kandidaten-Zeitbereichs-Rückkopplungsressource eine Kandidaten-Zeitbereichsressource zum Übertragen von ersten Rückkopplungsinformationen ist, wobei die ersten Rückkopplungsinformationen Rückkopplungsinformationen sind, die einem Downlink-Datenkanal einer ersten Ziel-DL SPS entsprechen, und die erste Ziel-DL SPS mindestens eine der mindestens zwei DL SPSs ist;
Bestimmen (S220) einer Ziel-Zeitbereichsressource anhand der Rückkopplungszeit-Anzeigeinformationen; und
Übertragen (S230) der ersten Rückkopplungsinformationen auf der Ziel-Zeitbereichsressource;
**dadurch gekennzeichnet, dass** die Rückkopplungszeit-Anzeigeinformationen Folgendes umfassen:
einen Versatzwert, wobei der Versatzwert einen Versatzwert der ersten Kandidaten-Zeitbereichs-Rückkopplungsressource relativ zu einem ersten Referenzpunkt umfasst;
wobei der erste Referenzpunkt eines der folgenden umfasst:
ein Empfangsereignis von DCI zum Aktivieren einer zweiten Ziel-DL SPS;
ein Empfangsereignis von einem ersten Downlink-Datenkanal der zweiten Ziel-DL SPS;
und
ein Rückkopplungsereignis von Rückkopplungsinformationen, die einem ersten Downlink-Datenkanal der zweiten Ziel-DL SPS entsprechen;
wobei die zweite Ziel-DL SPS eine DL SPS mit der kleinsten oder größten Kennung in der ersten Ziel-DL SPS ist.

2. Verfahren nach Anspruch 1, wobei die erste Ziel-DL SPS mindestens eines der folgenden umfasst:
alle für das Endgerät ausgelegte DL SPSs;
eine DL SPS mit einer spezifizierten Priorität;
eine DL SPS mit einer spezifizierten Kennung; und
eine aktive DL SPS.

3. Verfahren nach Anspruch 2, wobei die spezifizierte Priorität eine höchste Priorität und/oder eine niedrigste Priorität umfasst; oder die spezifizierte Priorität ein Satz von Prioritäten ist und der Satz von Prioritäten eine Vielzahl von Prioritäten umfasst.

4. Verfahren nach Anspruch 2, wobei die Rückkopplungszeit-Anzeigeinformationen ferner mindestens eines der folgenden umfassen:
ein Rückkopplungszeitfenster, wobei das Rückkopplungszeitfenster die mindestens eine erste Kandidaten-Zeitbereichs-Rückkopplungsressource umfasst;
eine Startposition der ersten Kandidaten-Zeitbereichs-Rückkopplungsressource;
eine Länge der ersten Kandidaten-Zeitbereichs-Rückkopplungsressource;
eine Endposition der ersten Kandidaten-Zeitbereichs-Rückkopplungsressource;
eine Menge der ersten Kandidaten-Zeitbereichs-Rückkopplungsressource; und
eine Anzahl oder ein Satz von Anzahlen der ersten Kandidaten-Zeitbereichs-Rückkopplungsressource.

5. Verfahren nach Anspruch 4, wobei das Rückkopplungszeitfenster mindestens eine Zeiteinheit umfasst und jede Zeiteinheit mindestens eine der ersten Kandidaten-Zeitbereichs-Rückkopplungsressourcen
umfasst, wobei die Zeiteinheit ein Slot, ein Sub-Slot oder ein Subframe ist.

6. Verfahren nach einem der Ansprüche 1 bis 5, wobei das Verfahren ferner Folgendes umfasst:
Überspringen der Übertragung der ersten Rückkopplungsinformationen auf die Ziel-Zeitbereichsressource in einem Fall, in dem die Ziel-Zeitbereichsressource mit einer Zeitbereichsressource für die Downlink-Übertragung kollidiert.

7. Verfahren nach einem der Ansprüche 1 bis 5, wobei die ersten Rückkopplungsinformationen Rückkopplungsinformationen für einige oder alle HARQ-Prozesse für die erste Ziel-DL SPS sind.

8. Verfahren nach einem der Ansprüche 1 bis 5, wobei das Empfangen von Rückkopplungszeit-Anzeigeinformationen das Empfangen der auf eine der folgenden Weisen gesendeten Rückkopplungszeit-Anzeigeinformationen umfasst:
Senden der Rückkopplungszeit-Anzeigeinformationen an das Endgerät über die Funkressourcensteuerung, RRC;
Senden der Rückkopplungszeit-Anzeigeinformationen an das Endgerät über gruppengemeinsame DCI; und
Senden der Rückkopplungszeit-Anzeigeinformationen an das Endgerät über endgerätspezifische DCI.

9. Vorrichtung (1200) zum Übertragen von Rückkopplungsinformationen, die auf ein Endgerät angewendet wird, wobei die Vorrichtung Folgendes umfasst:
ein Empfangsmodul (1210), das zum Empfangen von Rückkopplungszeit-Anzeigeinformationen ausgelegt ist, wobei das Endgerät mit einer Konfigurationsressource von mindestens zwei DL SPS-n ausgelegt ist, wobei die Rückkopplungszeit-Anzeigeinformationen zum Anzeigen mindestens einer ersten Kandidaten-Zeitbereichs-Rückkopplungsressource verwendet werden, wobei die erste Kandidaten-Zeitbereichs-Rückkopplungsressource eine Kandidaten-Zeitbereichsressource zum Übertragen von ersten Rückkopplungsinformationen ist, wobei die ersten Rückkopplungsinformationen Rückkopplungsinformationen sind, die einem Downlink-Datenkanal einer ersten Ziel-DL SPS entsprechen, und die erste Ziel-DL SPS mindestens eine der mindestens zwei DL SPSs ist;
ein Bestimmungsmodul (1220), das so ausgelegt ist, dass es anhand der Rückkopplungszeit-Anzeigeinformationen eine Ziel-Zeitbereichsressource bestimmt; und
ein Übertragungsmodul (1230), das so ausgelegt ist, dass es die ersten Rückkopplungsinformationen auf der Ziel-Zeitbereichsressource überträgt;
**dadurch gekennzeichnet, dass** die Rückkopplungszeit-Anzeigeinformationen Folgendes umfassen:
einen Versatzwert, wobei der Versatzwert einen Versatzwert der ersten Kandidaten-Zeitbereichs-Rückkopplungsressource relativ zu einem ersten Referenzpunkt umfasst;
wobei der erste Referenzpunkt eines der folgenden umfasst:
ein Empfangsereignis von DCI zum Aktivieren einer zweiten Ziel-DL SPS;
ein Empfangsereignis von einem ersten Downlink-Datenkanal der zweiten Ziel-DL SPS;
und
ein Rückkopplungsereignis von Rückkopplungsinformationen, die einem ersten Downlink-Datenkanal der zweiten Ziel-DL SPS entsprechen;
wobei die zweite Ziel-DL SPS eine DL SPS mit der kleinsten oder größten Kennung in der ersten Ziel-DL SPS ist.

10. Vorrichtung nach Anspruch 9, wobei die erste Ziel-DL SPS mindestens eines der folgenden umfasst:
alle für das Endgerät ausgelegte DL SPSs;
eine DL SPS mit einer spezifizierten Priorität;
eine DL SPS mit einer spezifizierten Kennung; und
eine aktive DL SPS.

11. Vorrichtung nach Anspruch 10, wobei die spezifizierte Priorität eine höchste Priorität und/oder eine niedrigste Priorität umfasst; oder die spezifizierte Priorität ein Satz von Prioritäten ist und der Satz von Prioritäten eine Vielzahl von Prioritäten umfasst.

12. Vorrichtung nach Anspruch 9, wobei die Rückkopplungszeit- Anzeigeinformationen ferner mindestens eines der folgenden umfassen:
ein Rückkopplungszeitfenster, wobei das Rückkopplungszeitfenster die mindestens eine erste Kandidaten-Zeitbereichs-Rückkopplungsressource umfasst;
eine Startposition der ersten Kandidaten-Zeitbereichs-Rückkopplungsressource;
eine Länge der ersten Kandidaten-Zeitbereichs-Rückkopplungsressource;
eine Endposition der ersten Kandidaten-Zeitbereichs-Rückkopplungsressource;
eine Menge der ersten Kandidaten-Zeitbereichs-Rückkopplungsressource; und
eine Anzahl oder ein Satz von Anzahlen der ersten Kandidaten-Zeitbereichs-Rückkopplungsressource,
wobei das Rückkopplungszeitfenster mindestens eine Zeiteinheit umfasst und jede Zeiteinheit mindestens eine der ersten Kandidaten-Zeitbereichs-Rückkopplungsressourcen umfasst, wobei die Zeiteinheit ein Slot, ein Sub-Slot oder ein Subframe ist.

13. Vorrichtung nach einem der Ansprüche 9 bis 12, wobei das Übertragungsmodul (1230) ferner so ausgelegt ist, dass es die Übertragung der ersten Rückkopplungsinformationen auf die Ziel-Zeitbereichsressource in einem Fall überspringt, in dem die Ziel-Zeitbereichsressource mit einer Zeitbereichsressource für die Downlink-Übertragung kollidiert.

14. Vorrichtung nach einem der Ansprüche 9 bis 12, wobei die ersten Rückkopplungsinformationen Rückkopplungsinformationen für einige oder alle HARQ-Prozesse für die erste Ziel-DL SPS sind.

15. Vorrichtung nach einem der Ansprüche 9 bis 12, wobei das Empfangsmodul (1210) Rückkopplungszeit-Anzeigeinformationen empfängt, das Empfangen der auf eine der folgenden Weisen gesendeten Rückkopplungszeit-Anzeigeinformationen umfasst:
Senden der Rückkopplungszeit-Anzeigeinformationen an das Endgerät über die RRC;
Senden der Rückkopplungszeit-Anzeigeinformationen an das Endgerät über gruppengemeinsame DCI; und
Senden der Rückkopplungszeit-Anzeigeinformationen an das Endgerät über endgerätspezifische DCI.

## Revendications

1. Procédé de transmission d'informations en retour, appliqué à un terminal, dans lequel le procédé comprend :
recevoir (S210) des informations d'indication de temps en retour, dans lequel le terminal est configuré avec une ressource de configuration d'au moins deux programmations semi-persistantes en liaison descendante, DL SPS, les informations d'indication de temps en retour sont utilisées pour indiquer au moins une première ressource candidate de domaine temporel en retour ; la première ressource candidate de domaine temporel en retour est une ressource candidate de domaine temporel pour la transmission de premières informations en retour, les premières informations en retour sont des informations en retour correspondant à un canal de données en liaison descendante d'un premier DL SPS cible, et le premier DL SPS cible est au moins l'un des au moins deux DL SPS ;
déterminer (S220) une ressource de domaine temporel cible sur la base des informations d'indication de temps en retour ; et
transmettre (S230) les premières informations en retour sur la ressource de domaine temporel cible ;
**caractérisé en ce que** les informations d'indication de temps en retour comprennent :
une valeur de décalage, ladite valeur de décalage comprenant une valeur de décalage de la première ressource candidate de domaine temporel en retour par rapport à un premier point de référence ;
dans lequel le premier point de référence comprend l'un des éléments suivants :
une occasion de réception de DCI pour activer un second DL SPS cible ;
une occasion de réception d'un premier canal de données en liaison descendante du second DL SPS cible ;
et
une occasion de retour d'informations en retour correspondant à un premier canal de données en liaison descendante du second DL SPS cible ;
dans lequel le second DL SPS cible est un DL SPS avec un identifiant plus petit ou plus grand dans le premier DL SPS cible.

2. Procédé selon la revendication 1, dans lequel le premier DL SPS cible comprend au moins l'un des éléments suivants :
tous les DL SPS configurés pour le terminal ;
un DL SPS avec une priorité spécifiée ;
un DL SPS avec un identifiant spécifié ; et
un DL SPS actif.

3. Procédé selon la revendication 2, dans lequel la priorité spécifiée comprend une priorité la plus élevée et/ou une priorité la plus faible ; ou la priorité spécifiée est un ensemble de priorités, et l'ensemble de priorités comprend une pluralité de priorités.

4. Procédé selon la revendication 2, dans lequel les informations d'indication de temps en retour comprennent en outre au moins l'un des éléments suivants :
une fenêtre temporelle de retour, la fenêtre temporelle de retour comprenant la au moins une première ressource candidate de domaine temporel en retour ;
une position de départ de la première ressource candidate de domaine temporel en retour ;
une longueur de la première ressource candidate de domaine temporel en retour ;
une position finale de la première ressource candidate de domaine temporel en retour ;
une quantité de la première ressource candidate de domaine temporel en retour ; et
un nombre ou un ensemble de nombres de la première ressource candidate de domaine temporel en retour.

5. Procédé selon la revendication 4, dans lequel la fenêtre temporelle de retour comprend au moins une unité de temps, et chaque unité de temps comprend au moins l'une des premières ressources candidates de domaine temporels en retour, dans lequel l'unité de temps est un créneau, un sous créneau ou une sous-trame.

6. Procédé selon l'une quelconque des revendications 1 à 5, dans lequel le procédé comprend en outre :
omettre de transmettre des premières informations en retour sur la ressource de domaine temporel cible dans le cas où la ressource de domaine temporel cible entre en collision avec une ressource de domaine temporel pour une transmission en liaison descendante.

7. Procédé selon l'une quelconque des revendications 1 à 5, dans lequel les premières informations en retour sont des informations en retour pour certains ou tous les processus HARQ pour le premier DL SPS cible.

8. Procédé selon l'une quelconque des revendications 1 à 5, dans lequel la réception des informations d'indication de temps en retour de comprend la réception des informations d'indication de temps en retour envoyées de l'une des manières suivantes :
envoyer les informations d'indication de temps en retour au terminal par le contrôle des ressources radio, RRC ;
envoyer les informations d'indication de temps en retour au terminal par DCI commun de groupe ; et
envoyer les informations d'indication de temps en retour au terminal par DCI spécifique au terminal.

9. Appareil (1200) de transmission d'informations en retour, appliqué à un terminal, dans lequel l'appareil comprend :
un module de réception (1210), configuré pour recevoir des informations d'indication de temps en retour, dans lequel le terminal est configuré avec une ressource de configuration d'au moins deux DL SPS, les informations d'indication de temps en retour sont utilisées pour indiquer au moins une première ressource candidate de domaine temporel en retour, la première ressource candidate de domaine temporel en retour est une ressource candidate de domaine temporel pour la transmission de premières informations en retour, les premières informations en retour sont des informations en retour correspondant à un canal de données en liaison descendante d'un premier DL SPS cible, et le premier DL SPS cible est au moins l'un des au moins deux DL SPS ;
un module de détermination (1220), configuré pour déterminer une ressource de domaine temporel cible sur la base des informations d'indication de temps en retour ; et
un module de transmission (1230), configuré pour transmettre les premières informations en retour sur la ressource de domaine temporel cible ;
**caractérisé en ce que** les informations d'indication de temps en retour comprennent :
une valeur de décalage, ladite valeur de décalage comprenant une valeur de décalage de la première ressource candidate de domaine temporel en retour par rapport à un premier point de référence ;
dans lequel le premier point de référence comprend l'un des éléments suivants :
une occasion de réception de DCI pour activer un second DL SPS cible ;
une occasion de réception d'un premier canal de données en liaison descendante du second DL SPS cible ;
et
une occasion de retour d'informations en retour correspondant à un premier canal de données en liaison descendante du second DL SPS cible ;
dans lequel le second DL SPS cible est un DL SPS avec un identifiant plus petit ou plus grand dans le premier DL SPS cible.

10. Appareil selon la revendication 9, dans lequel le premier DL SPS cible comprend au moins l'un des éléments suivants :
tous les DL SPS configurés pour le terminal ;
un DL SPS avec une priorité spécifiée ;
un DL SPS avec un identifiant spécifié ; et
un DL SPS actif.

11. Appareil selon la revendication 10, dans lequel la priorité spécifiée comprend une priorité la plus élevée et/ou une priorité la plus basse ; ou la priorité spécifiée est un ensemble de priorités, et l'ensemble de priorités comprend une pluralité de priorités.

12. Appareil selon la revendication 9, dans lequel les informations d'indication de temps en retour comprennent en outre au moins l'un des éléments suivants :
une fenêtre temporelle de retour, la fenêtre temporelle de retour comprenant la au moins une première ressource candidate temporelle en retour ;
une position de départ de la première ressource candidate de domaine temporel en retour ;
une longueur de la première ressource candidate de domaine temporel en retour ;
une position finale de la première ressource candidate de domaine temporel en retour ;
une quantité des premières ressources candidates de domaine temporels en retour ; et
un nombre ou un ensemble de nombres de la première ressource candidate de domaine temporel en retour,
dans lequel la fenêtre temporelle de retour comprend au moins une unité de temps, et chaque unité de temps comprend au moins l'une des premières ressources candidates de domaine temporels en retour, l'unité de temps étant un créneau, un sous créneau ou une sous-trame.

13. Appareil selon l'une quelconque des revendications 9 à 12, dans lequel le module de transmission (1230) est en outre configuré pour omettre de transmettre des premières informations en retour sur la ressource de domaine temporel cible dans le cas où la ressource de domaine temporel cible entre en collision avec une ressource de domaine temporel pour une transmission en liaison descendante.

14. Appareil selon l'une quelconque des revendications 9 à 12, dans lequel les premières informations en retour sont des informations en retour pour certains ou tous les processus HARQ pour le premier DL SPS cible.

15. Appareil selon l'une quelconque des revendications 9 à 12, dans lequel le module de réception (1210) reçoit des informations d'indication de temps en retour, comprend la réception des informations d'indication de temps en retour envoyées de l'une des manières suivantes :
envoyer les informations d'indication de temps en retour au terminal par RRC ;
envoyer les informations d'indication de temps en retour au terminal par DCI commun de groupe ; et
envoyer les informations d'indication de temps en retour au terminal par DCI spécifique au terminal.
